# EUROPEAN PATENT SPECIFICATION

(11) **EP 3 061 945 B1**
(45) Date of publication and mention of the grant of the patent: **15.11.2017**
(21) Application number: 16157752.3
(22) Date of filing: 26.02.2016
(51) Int. Cl.: F02C 6/00, F02C 9/28, F02C 9/54

(54) **METHOD FOR CONTROLLING THE OPERATION OF A GAS TURBINE WITH SEQUENTIAL COMBUSTION**
VERFAHREN ZUR STEUERUNG DES BETRIEBS EINER GASTURBINE MIT SEQUENZIELLER VERBRENNUNG
PROCEDE POUR COMMANDER LE FONCTIONNEMENT D'UNE TURBINE A GAZ A COMBUSTION SEQUENTIELLE

(30) Priority: 26.02.2015 EP 15156711
(43) Date of publication of application: 31.08.2016
(73) Proprietor: Ansaldo Energia IP UK Limited, London W1G 9DQ (GB)
(72) Inventor: Schesny, Andreas Jan, 8006 Zürich (CH); Schiessel, Pirmin, 5420 Ehrendingen (CH); Siewert, Piotr, 5417 Untersiggenthal (CH); Lüddecke, Torsten, 5400 Baden (CH); Dhital, Rajeshwor, 5420 Ehrendingen (CH)
(74) Representative: Bernotti, Andrea

(56) References cited:
- EP-A2- 2 600 063
- US-A- 5 481 865
- US-A1- 2006 096 292

## Description

### TECHNICAL FIELD

The present invention relates to the technology of gas turbines. It refers to a method for controlling the operation of a gas turbine with sequential combustion.

### PRIOR ART

The control of gas turbines with sequential combustion has been the object of various documents in the past.

For example, document US 8,434,312 teaches a method for the low-CO emissions part load operation of a gas turbine with sequential combustion, whereby the air ratio ([lambda]) of the operative burners of the second combustor is kept below a maximum air ratio ([lambda]max) at part load. In order to reduce the maximum air ratio ([lambda]), a series of modifications in the operating concept of the gas turbine are carried out individually or in combination. One modification is an opening of the row of variable compressor inlet guide vanes (VIGV) before engaging the second combustor. For engaging the second combustor, the row of variable compressor inlet guide vanes is quickly closed and fuel is introduced in a synchronized manner into the burner of the second combustor. A further modification is the deactivating of individual burners at part load.

Document EP 2 600 063 A2 discloses a method of operating a gas turbine with staged and/or sequential combustion, in which the burners of a second stage or a second combustor are sequentially switched on during loading and switched off during de-loading, whereby the total fuel mass flow and the compressor inlet guide vanes are adjusted at the same time to allow controlling gas turbine operation temperatures and engine power with respect to the required CO emission target.

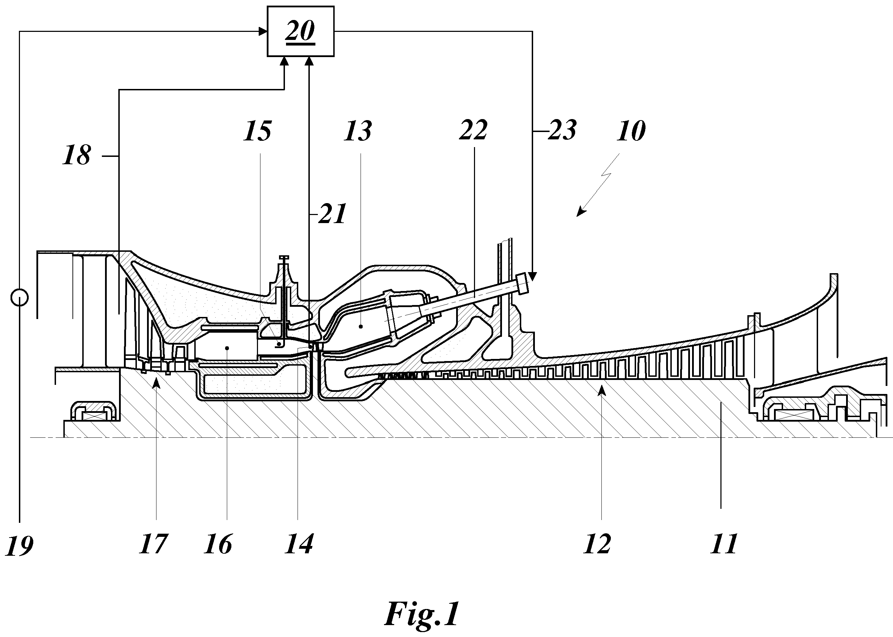

A basic control scheme of a gas turbine with sequential combustion (GT26 or the like) is shown in Fig. 1: The gas turbine 10 comprises a rotor 11, which is surrounded by a concentric casing. A compressor 12 compresses air that enters a first combustor 13 with first so-called EV burners 22 through a plenum. The resulting hot gas drives a first or high-pressure turbine 14. Downstream of high-pressure turbine 14 second so-called SEV burners 15 inject fuel into the gas, which still contains air, reheating the gas in a second combustor 16. The re-heated gas drives a second or low-pressure turbine 17 and finally exits the gas turbine 10.

A controller 20, which controls the operation of gas turbine 10, receives a TAT1 measurement 21 with the turbine outlet temperature TAT1 of high-pressure turbine 14 being measured at various (e.g. 24) points at the outlet of high-pressure turbine 14. Furthermore, it receives a TAT2 measurement 18 with the turbine outlet temperature TAT2 of low-pressure turbine 17 being measured at various points at the outlet of low-pressure turbine 17. Finally, it receives NOx emission data from a NOx CEMS measuring means 19 placed in the exhaust gas flow of gas turbine 10.

Using the measured data, controller 20 controls the operation of the first combustor 13 by means of an EV burner control 23.

For gas turbines with sequential combustion of the type shown in Fig. 1 the TAT1 measurement 21, i.e. the measurement of the turbine outlet temperature TAT of the (first) high-pressure turbine 14, is influenced by leakages.

These leakages are small for a new and clean engine (or an engine reassembled after an outage) but increase during operation.

These leakages affect some of the single TAT1 measurements, which are averaged to give an average TAT1 temperature TAT1 AVG, because the respective temperature sensors are influenced by cold leakage flow causing a measurement error, i.e. signaling a lower temperature.

The controller then increases the fuel flow to keep the TAT1 (respectively the turbine inlet temperature TIT1 of high-pressure turbine 14) at the design temperature. Because of the measurement error the actual TAT1 and actual TIT1 values increase leading to higher NOx emissions (and increased life time consumption of the machine).

Readjusting the engine after a significant increase in NOx emissions has been detected may solve the problem. However, this solution is cumbersome, unsatisfactory for the operator of the machine, and affects component lifetime.

A better way would be to use an advanced closed loop control with continuous emission and possibly pulsation feedback loops.

### DISCLOSURE OF THE INVENTION

It is an object of the invention to provide a method for controlling the operation of a gas turbine with sequential combustion, which avoids the drawbacks of prior approaches and allows preventing the exceeding of targeted NOx emission limits as well as a component stress increase.

This and other objects are obtained by a method as claimed in Claim 1.

The method according to the invention is used for controlling the operation of a gas turbine with sequential combustion, which gas turbine comprises a compressor with variable inlet guide vanes, a first combustor, a high-pressure turbine downstream of said first combustor, a second combustor downstream of said high-pressure turbine, and a low-pressure turbine downstream of said second combustor.

The method according to the invention comprises the steps of:
verifying that the gas turbine operates under base load conditions;
continuously measuring locally at various points the turbine outlet temperature TAT1 of the high-pressure turbine;
averaging over the various local TAT1 measurement values to get an average TAT1 temperature (TAT1 AVG);
controlling the operation of the first combustor depending on said average TAT1 temperature (TAT1 AVG);
checking if at least one local TAT1 measurement value, which is higher than said average TAT1 temperature (TAT1 AVG), is increasing;
adjusting said average TAT1 temperature (TAT1 AVG), if said at least one local TAT1 measurement value is increasing above a predetermined threshold value.

According to an embodiment of the inventive method said base load conditions comprise said variable inlet guide vanes to be open, a turbine inlet temperature of said first combustor being at a base load value, and a turbine inlet temperature of said second combustor being at a base load value.

According to another embodiment of the inventive method the moving average of a plurality of local TAT1 measurement values, which are higher than said average TAT1 temperature (TAT1 AVG), is checked, and said average TAT1 temperature (TAT1 AVG) is adjusted, if said moving average is increasing above a predetermined threshold value.

Specifically, according to one embodiment the largest local TAT1 measurement value of said moving average can be neglected. According to a further embodiment a plurality of TAT1 measurements, higher than the TAT1 AVG, are neglected.

Specifically, said moving average can for example be evaluated on a time scale of 10 minutes or longer.

More specifically, said moving average can be evaluated on a time scale of 20 minutes.

According to yet a further embodiment of the inventive method said predetermined threshold value is at least 5 K above a local TAT1 reference value. The local TAT1 reference value can for example be the average of the at least one local TAT1 measurement value at the beginning of an operating period when the gas turbine was adjusted. Alternatively the local TAT1 reference value can be a relative value, determined by the difference of the at least one local TAT1 measurement value towards the TAT1 AVG during base load operation at the beginning of the operation period. So instead of triggering an TAT1 adjustment when an absolute temperature of the at least one local TAT1 measurement value is reached, the TAT1 adjustment is triggered when the difference between the at least one local TAT1 measurement value and the TAT1 AVG exceeds the reference value, i.e. a temperature difference. By using a temperature difference possible changes in the target value for the TAT1 AVG due to changes in the operating concept have no influence on the TAT1 adjustment. The target TAT1, respectively the target turbine inlet temperature TIT1 can for example be changed to take into account changes in the fuel composition of fuel type, e.g. use of fuel gas or fuel oil.

Specifically, said predetermined threshold value can for example be 10 K above a local TAT1 reference value.

According to just another embodiment of the inventive method said adjusting of the average TAT1 temperature (TAT1 AVG) is done by stepwise decreasing said average TAT1 temperature (TAT1 AVG) by a predetermined amount. The actual TAT1 temperature (TAT1 AVG) can for example be reduced by adding an offset to the measured value in the controller. Thus the controller uses an increased value of TAT1 AVG for controlling the operation of the first combustor. Since the target control values are unchanged the controller will reduce the fuel flow to reduce the temperatures after offset to the target values.

According to a further embodiment of the inventive method the NOx content of the exhaust gases of the gas turbine is measured by NOx CEMS measuring means, and said average TAT1 temperature (TAT1 AVG) is only adjusted, if in addition the moving average of the NOx CEMS emission measurement values is above a predetermined threshold value.

Specifically, said moving average of the NOx CEMS emission measurement values can for example be evaluated on a time scale of 20 minutes, and said threshold value can for example be at 80% of guaranteed NOx emission level.

Specifically, according to a further embodiment the pressure pulsations are measured in said first combustor, and said average TAT1 temperature (TAT1 AVG) is only adjusted, if in addition the low frequency part of said measured pressure pulsations, especially in the frequency band between 100 Hz and 150 Hz, are below a predetermined threshold value, of especially 30 mbar.

More specifically, said average TAT1 temperature (TAT1 AVG) can only be adjusted, if all said adjustment criteria are fulfilled for a predetermined number of separate base load cycles and a predetermined time of operation.

Especially, said predetermined number of separate base load cycles can for example be at least 5, and that said predetermined time of operation can for example be at least 120 minutes.

### BRIEF DESCRIPTION OF THE DRAWINGS

The present invention is now to be explained more closely by means of different embodiments and with reference to the attached drawing.
- Fig. 1: shows a gas turbine with sequential combustion and a closed loop control circuit for its operation.

### WAYS OF CARRYING OUT THE INVENTION

The present invention is related to an Active TAT1 Control (ATC), which is a semiautomatic control logic adaption to improve the closed loop control of the first (EV) combustor of a gas turbine with sequential combustion like the already mentioned GT26. The ultimate goal is to keep the NOx emissions from reaching guaranteed upper limits.

This is done by adapting the average turbine outlet temperature of the (first) high-pressure turbine 14, i.e. TAT1 AVG, as a process control temperature. Linear regression analysis of an actual GT26 turbine showed that the average of the hottest 8 of actual 24 TAT1 measurements is able to indicate a mismatch between the measured NOx emissions and the controlled TAT1 AVG on base load. According to an embodiment of the invention the hottest 8 TAT1 measurements averaged over 20 minutes are used as an indicator to correct first (EV) combustor closed loop control disturbances, as for example EV hot gas temperature deviation, and thereby keep NOx emissions at the guaranteed level.

The final control logic design within controller 20 in this special case performs a semiautomatic, stepwise decrease of the EV process control temperature TAT1 AVG by 10 Kelvin on base load, after fulfilling 5 different criteria sequentially:
1. GT base load conditions are given:
2. The 20 minutes moving average of the hottest 8 TAT1 measurement values increased by 10 Kelvin relative to a reference measurement;
3. The 20 minutes moving average of the NOx OEMS emission measurement values is above 80% of guaranteed value.
4. The 100 Hz - 150Hz pulsation band of the first combustor 13 is below a pressure of 30 mbar.
5. Conditions 1,2,3,4 are fulfilled for 5 separate times of base load operation and for 120 minutes.

If the final 5th criterion is fulfilled the release of the ATC is given and can be activated by the operator.

The meaning of the criteria 1-5 listed above will be explained in more detail below:

### Re Criteria 1:

Base load conditions are given, if the variable inlet guide vanes (VIGV) are open (within 1° to a base load opening), the turbine inlet temperature TIT1 at the first combustor is at base load TIT1, and the turbine inlet temperature TIT2 at the second combustor is at a base load TIT2.

### Re Criteria 2:

In general, it has to be checked if at least one local TAT1 measurement value which is higher than TAT1 AVG (there are normally 24 local TAT1 measurements in a GT26) is increasing. If it is increasing above a threshold value (e.g. 10 K, could also be 5 K) the TAT1 AVG value is adjusted.

Only the TAT1 AVG is adjusted. The TAT2 AVG which is measured downstream of the low-pressure turbine 17, is not adjusted (there is no cooling in the exhaust duct downstream of low-pressure turbine 17, and thus no potential change due to cooling air leakage).

The time period can be of course shorter than 20 minutes, e.g. only 10 minutes or longer.

One or all TAT1 measurement values could be used (for example the moving average of any number of TAT1 measurements which are higher than the average could be used; further, for example the hottest local TAT1 measurement value could be neglected).

### Re Criteria 3:

The time period of 20 minutes is one example. The time period could be shorter or longer. The same is true for the 80%-value NOx emission.

### Re Criteria 4:

The 100 Hz - 150Hz pulsation band of the first combustor 13 is also called "low frequency pulsations" or "lean blow off pulsation".

### Re Criteria 5:

"5 separate times of base load operation" means that the gas turbine should be deloaded between consecutive base load operations to a load below base load -of course only in this embodiment.

Furthermore, the adjustment can also be done automatically, i.e. it does not have to be done by an operator.

### The advantages of the inventive method are:

Especially on engines with many starts a faster propagation of the TAT1 Shift can be observed. The current solution only reacts as engine operator raises concerns because guaranteed or environmental NOx emission limits are exceeded. The advantage of the invention is a prevention of exceeding targeted NOx emission limits as well as a prevention of component stress increase.

### LIST OF NUMERALS

- 10: gas turbine
- 11: rotor
- 12: compressor
- 13: combustor
- 14: high-pressure turbine (TAT1)
- 15: SEV burner
- 16: combustor
- 17: low-pressure turbine (TAT2)
- 18: TAT2 measurement(s)
- 19: NOx CEMS measuring means
- 20: controller
- 21: TAT1 measurement(s)
- 22: EV burner
- 23: EV burner control

## Claims

1. Method for controlling the operation of a gas turbine (10) with sequential combustion; the gas turbine (10) comprising a compressor (12) with variable inlet guide vanes (VIGV), a first combustor (13), a high-pressure turbine (14) downstream of said first combustor (13), a second combustor (16) downstream of said high-pressure turbine (14), and a low-pressure turbine (17) downstream of said second combustor (16); said method comprising the steps of:
• verifying that the gas turbine (10) operates under base load conditions;
• continuously measuring locally at various points the turbine outlet temperature TAT1 of the high-pressure turbine (14);
• averaging over the various local TAT1 measurement values to get an actual average TAT1 temperature (TAT1 AVG);
• controlling the operation of the first combustor (13) in dependence of said actual average TAT1 temperature (TAT1 AVG);
• checking if at least one local TAT1 measurement value, which is higher than said actual average TAT1 temperature (TAT1 AVG), is increasing;
• measuring the NOx content of the exhaust gases of the gas turbine (10) by NOx CEMS measuring means (19);
• checking if the moving average of a plurality of local TAT1 measurement values, which are higher than said actual average TAT1 temperature (TAT1 AVG), is increasing above a predetermined threshold value
• adjusting the actual control average TAT1 temperature (TAT1 AVG), if said at least one local TAT1 measurement value is increasing above a predetermined threshold value, if the moving average of a plurality of local TAT1 measurement values is increasing above a predetermined threshold value and if the moving average of the NOx CEMS emission measurement values is above a predetermined threshold value

2. Method as claimed in Claim 1, **characterized in that** said base load conditions comprise said variable inlet guide vanes (VIGV) to be open, a turbine inlet temperature (TIT1) of said first combustor (13) being at a base load value, and a turbine inlet temperature (TIT2) of said second combustor (16) being at a base load value.

3. Method as claimed in Claim 1, **characterized in that** the largest local TAT1 measurement value of said moving average is neglected.

4. Method as claimed in Claim 1, **characterized in that** said moving average is evaluated on a time scale of 10 minutes or longer.

5. Method as claimed in Claim 4, **characterized in that** said moving average is evaluated on a time scale of 20 minutes.

6. Method as claimed in Claim 1, **characterized in that** said predetermined threshold value is at least 5 K above a local TAT1 reference value.

7. Method as claimed in Claim 6, **characterized in that** said predetermined threshold value is 10 K above a local TAT1 reference value.

8. Method as claimed in Claim 1, **characterized in that** said adjusting of the actual average TAT1 temperature (TAT1 AVG) is done by stepwise decreasing said actual average TAT1 temperature (TAT1 AVG) by a predetermined amount.

9. Method as claimed in Claim 1, **characterized in that** said moving average of the NOx CEMS emission measurement values is evaluated on a time scale of 20 minutes, and said threshold value is at 80% of guaranteed NOx emission level.

10. Method as claimed in Claim 1, **characterized in that** pressure pulsations are measured in said first combustor (13), and that said actual average TAT1 temperature (TAT1 AVG) is only adjusted, if in addition the low frequency part of said measured pressure pulsations, especially in the frequency band between 100 Hz and 150 Hz, are below a predetermined threshold value, of especially 30 mbar.

11. Method as claimed in Claim 10, **characterized in that** said actual average TAT1 temperature (TAT1 AVG) is only adjusted, if all said adjustment criteria are fulfilled for a predetermined number of separate base load cycles and a predetermined time of operation.

12. Method as claimed in Claim 11, **characterized in that** said predetermined number of separate base load cycles is at least 5, and that said predetermined time of operation is at least 120 minutes.

## Patentansprüche

1. Verfahren zum Steuern des Betriebs einer Gasturbine (10) mit sequenzieller Verbrennung, wobei die Gasturbine (10) einen Verdichter (12) mit verstellbaren Einlassleitschaufeln (VIGV), eine erste Brennkammer (13), eine Hochdruckturbine (14) stromabwärts der ersten Brennkammer (13), eine zweite Brennkammer (16) stromabwärts der Hochdruckturbine (14) und eine Niederdruckturbine (17) stromabwärts der zweiten Brennkammer (16) aufweist, welches Verfahren die Schritte umfasst:
- Verifizieren, dass die Gasturbine (10) unter Grundlastbedingungen arbeitet;
- kontinuierliche örtliche Messung der Turbinenauslasstemperatur TAT1 der Hochdruckturbine (14) an verschiedenen Punkten;
- Durchschnittswertbildung der verschiedenen örtlichen TAT1-Messwerte, um eine tatsächliche Durchschnitts-TAT1-Temperatur (TAT1 AVG) zu erhalten;
- Regeln des Betriebs der ersten Brennkammer (13) in Abhängigkeit von der tatsächlichen Durchschnitts-TAT1-Temperatur (TAT1 AVG);
- Prüfen, ob mindestens ein örtlicher TAT1-Messwert, der höher ist als die tatsächliche Durchschnitts-TAT1-Temperatur (TAT1 AVG), ansteigt;
- Messen des NOₓ-Gehalts des Abgases der Gasturbine (10) durch eine NOₓ CEMS-Messeinrichtung (19);
- Prüfen, ob der gleitende Durchschnitt einer Vielzahl von örtlichen TAT1-Messwerten, die höher sind als eine tatsächliche Durchschnitts-TAT1-Temperatur (TAT1 AVG), über einen vorbestimmten Schwellenwert ansteigt;
- Einstellen der tatsächlichen Regelungs-Durchschnitts-TAT1-Temperatur (TAT1 AVG), wenn der mindestens eine örtliche TAT1-Messwert über einen vorbestimmten Schwellenwert ansteigt, wenn der gleitende Durchschnitt einer Vielzahl von örtlichen TAT1-Messwerten über einen vorbestimmten Schwellenwert ansteigt und wenn der gleitende Durchschnitt der NOₓ CEMS-Emissionsmesswerte über einem vorbestimmten Schwellenwert liegt.

2. Verfahren nach Anspruch 1, **dadurch gekennzeichnet, dass** die Grundlastbedingungen umfassen, dass die verstellbaren Einlassleitschaufeln (VIGV) offen sind, eine Turbineneinlasstemperatur (TIT1) der ersten Brennkammer (13) auf einem Grundlastwert ist und eine Turbineneinlasstemperatur (TIT2) der zweiten Brennkammer (16) auf einem Grundlastwert ist.

3. Verfahren nach Anspruch 1, **dadurch gekennzeichnet, dass** der höchste örtliche TAT1-Messwert des gleitenden Durchschnitts vernachlässigt wird.

4. Verfahren nach Anspruch 1, **dadurch gekennzeichnet, dass** der gleitende Durchschnitt auf einer Zeitskala von 10 Minuten oder länger bewertet wird.

5. Verfahren nach Anspruch 1, **dadurch gekennzeichnet, dass** der gleitende Durchschnitt auf einer Zeitskala von 20 Minuten bewertet wird.

6. Verfahren nach Anspruch 1, **dadurch gekennzeichnet, dass** der vorbestimmte Schwellenwert mindestens 5 K über einem örtlichen TAT1-Bezugswert liegt.

7. Verfahren nach Anspruch 6, **dadurch gekennzeichnet, dass** der vorbestimmte Schwellenwert 10 K über einem örtlichen TAT1-Bezugswert liegt.

8. Verfahren nach Anspruch 1, **dadurch gekennzeichnet, dass** das Einstellen der tatsächlichen Durchschnitts-TAT1-Temperatur (TAT1 AVG) durch schrittweises Verringern der tatsächlichen Durchschnitts-TAT1-Temperatur (TAT1 AVG) um ein vorbestimmtes Ausmaß erfolgt.

9. Verfahren nach Anspruch 1, **dadurch gekennzeichnet, dass** der gleitende Durchschnitt der NOₓ CEMS-Emissionsmesswerte auf einer Zeitskala von 20 Minuten bewertet wird und der Schwellenwert bei 80 % des garantierten NOₓ CEMS-Emissionsniveaus liegt.

10. Verfahren nach Anspruch 1, **dadurch gekennzeichnet, dass** Druckpulsationen in der ersten Brennkammer (13) gemessen werden, und dadurch, dass die tatsächliche Durchschnitts-TAT1-Temperatur (TAT1 AVG) nur eingestellt wird, wenn zusätzlich der Niederfrequenzteil der gemessenen Druckpulsationen insbesondere in dem Frequenzband zwischen 100 Hz und 150 Hz unter einem vorbestimmten Schwellenwert von insbesondere 30 mbar liegt.

11. Verfahren nach Anspruch 10, **dadurch gekennzeichnet, dass** die tatsächliche Durchschnitts-TAT1-Temperatur (TAT1 AVG) nur eingestellt wird, wenn alle Einstellkriterien über eine vorbestimmte Anzahl von getrennten Grundlastzyklen und eine vorbestimmte Betriebszeit erfüllt werden.

12. Verfahren nach Anspruch 11, **dadurch gekennzeichnet, dass** die vorbestimmte Anzahl von getrennten Grundlastzyklen mindestens 5 ist und dass die vorbestimmte Betriebszeit mindestens 120 Minuten ist.

## Revendications

1. Procédé de contrôle du fonctionnement d'une turbine à gaz (10) à combustion séquentielle ; la turbine à gaz (10) comprenant un compresseur (12) avec des aubes directrices d'entrée variables (VIGV), une première chambre de combustion (13), une turbine à haute pression (14) en aval de ladite première chambre de combustion (13), une seconde chambre de combustion (16) en aval de ladite turbine à haute pression (14), et une turbine à basse pression (17) en aval de ladite seconde chambre de combustion (16) ; ledit procédé comprenant les étapes consistant à :
- vérifier que la turbine à gaz (10) fonctionne dans des conditions de charge de base ;
- mesurer localement en continu, en différents points, la température de sortie de turbine TAT1 de la turbine à haute pression (14) ;
- moyenner les différentes valeurs de mesures locales TAT1 afin d'obtenir une température moyenne réelle (TAT1 AVG) ;
- contrôler le fonctionnement de la première chambre de combustion (13) en fonction de ladite température moyenne réelle TAT1 (TAT1 AVG) ;
- vérifier si au moins une valeur de mesure TAT1 locale, qui est supérieure à ladite température moyenne réelle TAT1 (TAT1 AVG), augmente ;
- mesurer la teneur en NOx des gaz d'échappement de la turbine à gaz (10) à l'aide d'un moyen de mesure de NOx CEMS (19) ;
- vérifier si la moyenne mobile d'une pluralité de valeurs de mesures locales TAT1, qui sont supérieures à ladite température moyenne réelle TAT1 (TAT1 AVG), augmente au-dessus d'une valeur de seuil prédéterminée ;
- régler la température moyenne de contrôle réelle TAT1 (TAT1 AVG), si ladite au moins une valeur de mesure locale TAT1 augmente au-dessus d'une valeur de seuil prédéterminée, si la moyenne mobile d'une pluralité de valeurs de mesures locales TAT1 augmente au-dessus d'une valeur de seuil prédéterminée et si la moyenne mobile des valeurs de mesure d'émissions de NOx CEMS est supérieure à une valeur de seuil prédéterminée.

2. Procédé selon la revendication 1, **caractérisé en ce que** lesdites conditions de charge de base comprennent le fait que lesdites aubes directrices d'entrée variables (VIGV) soient ouvertes, le fait qu'une température d'entrée de turbine (TIT1) de ladite première chambre de combustion (13) soit au niveau d'une valeur de charge de base, et le fait qu'une température d'entrée de turbine (TIT2) de ladite seconde chambre de combustion (16) soit au niveau d'une valeur de charge de base.

3. Procédé selon la revendication 1, **caractérisé en ce que** la valeur de mesure locale la plus élevée TAT1 de ladite moyenne mobile est négligée.

4. Procédé selon la revendication 1, **caractérisé en ce que** la dite moyenne mobile est évaluée sur une échelle de temps de 10 minutes ou plus.

5. Procédé selon la revendication 4, **caractérisé en ce que** la dite moyenne mobile est évaluée sur une échelle de temps de 20 minutes ou plus.

6. Procédé selon la revendication 1, **caractérisé en ce que** ladite valeur de seuil prédéterminée est au moins 5 K supérieure à une valeur de référence TAT1 locale.

7. Procédé selon la revendication 6, **caractérisé en ce que** ladite valeur de seuil prédéterminée est au moins 10 K supérieure à une valeur de référence TAT1 locale.

8. Procédé selon la revendication 1, **caractérisé en ce que** ledit ajustement de ladite température moyenne réelle TAT1 (TAT1 AVG) est effectué progressivement en diminuant ladite température moyenne réelle TAT1 (TAT1 AVG) selon une quantité prédéterminée.

9. Procédé selon la revendication 1, **caractérisé en ce que** ladite moyenne mobile des valeurs de mesure d'émissions de NOx CEMS est évaluée sur une échelle de temps de 20 minutes, et ladite valeur de seuil est égale à au moins 80% du niveau d'émissions de NOx garanti.

10. Procédé selon la revendication 1, **caractérisé en ce que** les pulsations de pression sont mesurées dans ladite première chambre de combustion (13), et **en ce que** ladite température moyenne réelle TAT1 (TAT1 AVG) est réglée uniquement si, en outre, la partie basse fréquence desdites pulsations de pression mesurées, notamment sur la bande de fréquences comprise entre 100 Hz et 150 Hz, est inférieure à une valeur de seuil prédéterminée, en particulier de 30 mbar.

11. Procédé selon la revendication 10, **caractérisé en ce que** ladite température moyenne réelle TAT1 (TAT1 AVG) est réglée uniquement si tous lesdits critères d'ajustement sont remplis pour un nombre prédéterminé de cycles de charge de base distincts et pendant une durée de fonctionnement prédéterminée.

12. Procédé selon la revendication 11, **caractérisé en ce que** ledit nombre prédéterminé de cycles de charge de base distincts est d'au moins 5, et **en ce que** ladite durée de fonctionnement prédéterminée est d'au moins 120 minutes.
